# EUROPEAN PATENT SPECIFICATION

(11) **EP 4 086 873 B1**
(45) Date of publication and mention of the grant of the patent: **27.11.2024**
(21) Application number: 20909947.2
(22) Date of filing: 15.12.2020
(51) Int. Cl.: G08G 1/09, B60W 40/08, B60W 50/12, B60W 30/14, B60W 30/18, B60W 50/00, B60W 50/14, G08G 1/0967

(54) **DRIVING LIMITATION SYSTEM**
ANTRIEBSBEGRENZUNGSSYSTEM
SYSTÈME DE LIMITATION DE CONDUITE

(30) Priority: 04.01.2020 JP 2020000028
(43) Date of publication of application: 09.11.2022
(73) Proprietor: Land Business Co., Ltd., Tokyo 100-6030 (JP)
(72) Inventor: KAMEI, Masamichi, Tokyo 153-0062 (JP)
(74) Representative: TBK
(86) International application number: PCT/JP2020/046768
(87) International publication number: WO 2021/137292

(56) References cited:
- EP-A1- 3 125 169
- JP-A- 2007 108 005
- JP-A- 2016 220 401
- JP-A- 2019 086 395
- US-A1- 2012 215 416
- US-A1- 2018 237 032

## Description

### TECHNICAL FIELD

This invention relates to a driving limitation system by which limitation is applied to driving of a vehicle in accordance with the ability of a driver such as physical ability, cognitive ability and non-cognitive ability associated with driver's own character and/or emotions.

### BACKGROUND ARTS

Serious traffic accidents caused by driving operation by an aged driver inferior to one's own cognitive ability and/or physical ability and by reckless driving that happens in association with driver's own character and/or emotions regardless of age are becoming a social problem.

Meanwhile, with development of a car navigation system, an engine control unit (ECU) has been recently developed in regards to traveling control of a vehicle, and as a result, advanced driving control can be performed based on storage speed limit information and other road information that are all contained together with road map information.

Further, as an extension of the above arts, development of a technology aimed at realizing an absolutely automatic driving system is being progressed.

In relation to a device in which a car navigation system and a constant-speed traveling device are interlocked together, there is provided a constant-speed traveling control device containing a navigation device as disclosed in JP 3 024 478 B2. Namely, as one constant-speed traveling control device containing the navigation device, the patent document 1 discloses a constant-speed traveling control device comprising a device which makes use of a navigation device and performs constant-speed traveling control centering on a driver's own vehicle location searched by the navigation device such that a vehicle traveling speed is held not to exceed a safety speed, wherein a display means is provided to display the safety speed during execution of constant-speed traveling control in accordance with the safety speed.

Japanese Unexamined Patent Application Publication JP Hei09-288797 A discloses a technology which is aimed at realizing comfortable and safety traveling resulting from alleviation of the driving operation load on a driver and by which, in performing speed control by adjusting the drive force of an engine so as to conform an actual vehicle speed to a target vehicle speed, reference speed data corresponding to a road where a driver's own vehicle is traveling at present is read out from among map data on the basis of the current location of the driver's own vehicle, the target vehicle speed is then determined based on the readout reference speed data, and consequently, speed control is performed.

Japanese Unexamined Patent Application Publication JP Hei10-159615 A discloses an automobile maximum speed control device comprising a car navigation system for deducing a road where a driver's own vehicle is located, and then determining a speed limit on the deduced road, and an on-vehicle computer for outputting, based on both speed limit information on the deduced road and driver's own vehicle traveling speed information, a command signal that is for imposing limitation on an engine speed such that a traveling speed does not exceed the speed limit, wherein the engine speed is suppressed to control acceleration of the driver's own vehicle in the occurrence of output of this command signal.

JP 4 023 383 B2 discloses a speed limit information providing device which performs output of speed limit information on a road to the outside, the speed limit information providing device comprising a speed limit acquisition means for acquiring a speed limit on a road where a driver's own vehicle is traveling, a deceleration factor acquisition means for acquiring a position of a deceleration factor located on the road, and a control means for controlling output of the speed limit acquired by the speed limit acquisition means, wherein the control means has a speed-limit change position detection part for detecting a position where the speed limit is changed, and a timing determination part for determining timing at which the acquired speed limit is outputted, in accordance with the positional relation between the speed-limit change position detected by the speed-limit change position detection part and the position of the deceleration factor.

JP 4 762 528 B2 discloses a technology relating to a vehicle traveling safety device in which a vehicle speed that causes a vehicle to generate appropriate lateral acceleration or lateral acceleration permissible for the vehicle to appropriately pass the curve is calculated based on a recognized curve shape, and thereafter, an appropriate vehicle speed or appropriate lateral acceleration is set to a value equal to or higher than an upper limit speed or upper limit lateral acceleration that is set by a steering control means, whereby a safety device is prevented from being excessively operated during execution of steering control, and consequently, both steeling control operation and safety device operation can be controlled cooperatively and appropriately when the vehicle passes the curve.

As one traveling control device by which a driver of a vehicle is allowed, with time to spare, to respond to a pedestrian crossing a road, JP 5 109 774 B2 discloses a traveling control device comprising a risk level information receiving means for receiving, from a road-side transmitter installed on a road where the vehicle is traveling, risk level information showing the level of risk caused by a pedestrian crossing the road, and a traveling plan generation means for generating a traveling plan of the vehicle, wherein correction of the traveling plan is performed by the traveling plan generation means on the basis of the risk level information received by the risk level information receiving means.

In relation to a system with a vehicle speed limiting function for limiting a vehicle speed to not more than a limiting vehicle speed, regardless of conventional accelerator operation by a driver, to alleviate the driving load on a driver, JP 5 833 889 B2 discloses a vehicle traveling control device by which the vehicle speed of a driver's own vehicle is smoothly converged to the limiting vehicle speed, and unnatural speed change can be prevented, when changeover to vehicle speed limiting control takes place.

Japanese Unexamined Patent Application Publication JP 2016-220401 A discloses a speed control method of an electric automobile, in which when a reading device transmits, to a speed control device, driver information read from a recording medium, the speed control device records the driver information into a database, while upon receipt of driver's biometric information from an authentication device, the speed control device retrieves biometric information on the database, so that when correspondence biometric information is found, an instruction signal to be sent to a drive device is calculated based on at least one of driver's attribute information and driver's driving history information.

In relation to a center device which owns various traveling environment information (map information, road sign and marking information, traffic congestion information, road regulations information and weather information, for instance) in regards to all the roads within the jurisdictional district, Japanese Unexamined Patent Application Publication JP 2010-169538 A discloses a communication type car navigation system by which traveling support is performed in such a way as to transmit, as safety traveling support information or energy-saving traveling support information to an on-vehicle device of the relevant vehicle, the results of comparison, arithmetic processing and decision of safety traveling-related consistency (whether the vehicle is violating traffic regulations, for instance) between vehicle condition information (vehicle traveling condition information, vehicle information and driver information) sent from the on-vehicle device for each fixed time or each time the vehicle travels a fixed distance and traveling environment information corresponding to the vehicle condition information owned by the center device, or of whether to execute energy-saving traveling and of traveling conditions of energy-saving traveling when judged as being executed.

Moreover, US 2012/215416 A1 discloses a speed limiter that automatically limits the maximum speed of a motor vehicle based on the segment of the road the vehicle is travelling on and on the user or driver of the vehicle, by modifying an actual throttle sensor signal from the throttle position sensor of the vehicle transmitted to the engine control unit. Furthermore, US 2018/237032 A1 refers to controlling a driving mode of a self-driving vehicle by a comparing a competence level of an on-board SDV control processor to a human driver competence level of a human driver in controlling the SDV while the SDV encounters a current roadway condition. Still further, EP 3 125 169 A1 shows a geofence mechanism generating a continuous geofence with a control unit based on a user profile for continuously controlling a device within the continuous geofence.

### SUMMARY OF THE INVENTION

### PROBLEMS TO BE SOLVED BY THE INVENTION

The conventionally developed traveling control system and automatic driving system for the vehicle are aimed at preventing collision accidents on the basis of road information incorporated as data in the navigation system and/or factors sensed by sensors, such as obstacles and motions of persons and animals and of other vehicles and objects, for instance.

It is true that improvement of this type of traveling control system and automatic driving system results in allowing vehicle traveling safety to be gradually increased, whereas because of the fact that these systems are costly and involve execution of complicated control, there arise problems such as difficulty in installation to a vehicle for general public in terms of cost and anxiety about failure of the system to fully function due to malfunction of a complicated control system.

Under these circumstances, a tragic automobile accident caused by an aged driver inferior to one's own driving ability and/or cognitive ability is becoming a social problem in recent years.

These are difficult problems for which solutions thereof cannot be found easily only by legal regulations, and meanwhile, it is not realistic that all the drivers including the aged driver inferior to one's own driving ability and/or cognitive ability and the driver being prone to drive dangerously are required to purchase a costly vehicle having an advanced automatic control function.

The present invention focuses on the processing of applying limitation to driving of a vehicle in accordance with the ability of a driver such as physical ability and cognitive ability, but not on a complicated and costly system such as the conventionally developed driving control system and automatic driving system, and is therefore intended to provide a relatively-simple and low-cost driving limitation system.

### MEANS FOR SOLVING THE PROBLEMS

According to the invention, the above object is achieved by a driving limitation system according to claim 1. Further features and advantageous modifications are defined in the dependent claims.

A driving limitation system of the present invention comprises:
a driver authentication means for identifying a driver of a vehicle,
a driver information storage means in which driver information on the driver identified by the driver authentication means is stored,
a vehicle speed limitation data storage means in which data relating to vehicle speed limitation to be applied in accordance with physical ability information or cognitive ability information of the driver is stored,
a vehicle speed control data generation means for, in regards to the driver identified by the driver authentication means, extracting storage data relating to the vehicle speed limitation from the vehicle speed limitation data storage means on the basis of the driver information extracted from the driver information storage means, and then generating vehicle speed control data,
a vehicle traveling area limitation data storage means in which data relating to vehicle traveling area limitation to be applied in accordance with the physical ability information or cognitive ability information of the driver is stored, and
a vehicle traveling acceptable area setting means for, in accordance with the driver information extracted from the driver information storage means, extracting the vehicle traveling area limitation data from among the storage data in the vehicle traveling area limitation data storage means, and then setting a vehicle traveling acceptable area,
wherein the vehicle speed control data generated by the vehicle speed control data generation means is transmitted to a vehicle speed control system,
a traveling speed control command is generated to perform traveling speed control in the vehicle speed control system, and
traveling speed control is performed based on the traveling speed control command to set the traveling speed of the vehicle to be equal to or lower than a speed that is based on the vehicle speed control data, and
wherein data relating to the vehicle traveling acceptable area that is set by the vehicle traveling acceptable area setting means is transmitted to the vehicle speed control system,
a traveling area control command is generated to perform vehicle traveling area control in the vehicle speed control system in such a way as to gradually make the traveling speed of the vehicle lower before the vehicle reaches the traveling acceptable area, and
traveling area control is performed based on the traveling area control command to set the traveling area of the vehicle to be within a traveling area that is based on the vehicle traveling acceptable area data.

Examples of the existing driver authentication means include an input device such as card reader mounted on the vehicle, a receiving device for receiving input information inputted from a mobile terminal and a biometric authentication device (fingerprint authentication, face authentication, voice authentication and others), for instance, and it is to be noted herein that the driver authentication means can make use of the above devices but is not limited to those.

When the driver of the vehicle is identified by the driver authentication means and then, information on the driver such as information showing that the driver is aged and inferior to one's own physical ability and/or cognitive ability, for instance, is taken out from the driver information storage means, extraction of storage data relating to vehicle speed limitation from the vehicle speed limitation data storage means is performed based on the taken-out driver information, followed by selection or arithmetic processing using an on-vehicle computer (or a CPU of a navigation system, for instance) provided to serve as the vehicle speed control data generation means, resulting in generation of the vehicle speed control data in accordance with the physical ability and/or cognitive ability of the driver.

In this case, the driving limitation system of the present invention is sometimes supposed to set a vehicle speed lower than the speed limit on the road where the driver's own vehicle is traveling, in which case, the processing of setting a safety speed suited to the driver is performed to avoid accidents, for instance.

Even when information on traffic violation is taken out, a vehicle speed control command in accordance with the driver is generated similarly, and consequently, dangerous driving caused by the character and/or emotional ups and downs of the driver can be forcibly eliminated.

It is to be noted that, in regards to the driver information stored in the driver information storage means, storage of only driver information limited to drivers of a specific vehicle, that is, information on a plurality of drivers being prone to drive the specific vehicle is sometimes performed, in addition to storage of information on a plurality of or large number of arbitrary drivers without limiting the vehicle.

The driving limitation system of the present invention is allowed to perform limitation in the traveling area, in addition to traveling speed control in accordance with the ability of the driver, thereby making it possible to avoid the risk that the aged driver inferior to one's own physical ability and/or cognitive ability will come to be unable to return to a starting point after driving to a remote area or will meet an accident.

The traveling area control command by the vehicle speed control system in this case can be a control command for limiting the traveling speed of the vehicle to a speed equal to or lower than a prescribed value.

Specifically, in regards to the driver identified by the driver authentication means, the information on the physical ability and/or cognitive ability of the driver is extracted based on the driver information extracted from the driver information storage means, vehicle traveling acceptable area control data suited to the identified driver is then set based on the storage data in the vehicle traveling area limitation data storage means, and consequently, traveling speed control is performed based on the vehicle traveling area control data such as to gradually make the traveling speed of the vehicle lower before the driver's own vehicle reaches an area beyond the traveling acceptable area.

Because of the fact that an action of suddenly stopping the vehicle on the boundary between the traveling acceptable area and a traveling prohibited area is a rather dangerous action and besides, involves the need for operation of returning to the starting point, the execution of traveling speed control so as to gradually make the traveling speed of the vehicle lower results in allowing the driver to recognize that the driver's own vehicle is approaching the vicinity of the boundary, thereby making it possible to urge the driver to stop the vehicle safely and return to the starting point.

It is to be noted that a means for informing the driver, by a warning sound or with voice, that the driver's own vehicle is approaching the boundary is useful when separately used in combination.

The range of the traveling acceptable area can be set in accordance with the ability of the driver, such as an area within a radius of 100km, 50km or 20km from a driver's own house, for instance. Otherwise, in relation of the map information of a car navigation system, for instance, when the danger of passage of vehicles or the difficulty in traveling arises, it may be possible also to set a specific section as the traveling prohibited area in accordance with the level of the danger or difficulty.

Moreover, the driving limitation system of the present invention may also take a configuration provided with a driver condition acquisition means for grasping a driver condition during driving, a vehicle information acquisition means for grasping a vehicle condition during driving and an around-vehicle information acquisition means for grasping a situation around the vehicle during driving, wherein one of or more than one of an abnormality alarm means for generating an alarm in case of abnormality, an emergency stop means for stopping the vehicle and an emergency guide means for guiding to a place of safety or to a specified facility (such as hospital, police station and other public or private facilities, for instance) is provided to cope with the abnormality when recognized by any of the driver condition acquisition means, the vehicle information acquisition means and the around-vehicle information acquisition means.

In regards to the vehicle speed control system, as previously described in the paragraphs of "BACKGROUND ARTS", various types of systems have been developed, such as a system of the type that controls an engine function to set the vehicle speed to be equal to or lower than the speed limit on the traveling road or that actuates a braking mechanism, even when accelerator operation for increasing the vehicle speed is performed by the driver. And, this vehicle speed control system generates the control command on the basis of the vehicle speed control data obtained by a vehicle speed control data selection means, for instance, and thereafter, transmits the generated control command in the form of a control signal to an engine and/or a braking system of the vehicle, whereby the vehicle traveling speed can be set to be equal to or lower than a prescribed safety speed.

### EFFECTS OF THE INVENTION

The driving limitation system of the present invention does not relate to the complicated and costly system like the conventionally developed driving control system and automatic driving system, but relates to the system by which limitation is applied to driving of the vehicle in accordance with the ability of the driver such as the physical ability, cognitive ability and non-cognitive ability associated with the driver's own character and/or emotions, wherein the vehicle speed and/or the traveling area can be limited according to simple steps of the control processing, so that a system configuration is simplified as a whole, thus making it possible to provide a low-cost system.

The driving limitation system of the present invention can constitute a simplified and low-cost system, differently from a vehicle equipped with a large number of highly-sensitive sensors, an advanced artificial intelligence (AI) and an advanced traveling control mechanism or like vehicle considered to be difficult for generalization by economic factors. Therefore, this driving limitation system can be widely generalized to a vehicle for general public, and as a result, it is possible to prevent dangerous driving caused by the aged driver as being becoming the social problem, and to reduce the traffic accidents, thus making a contribution toward a reduction in deadly accident, particularly, in deadly accident of pedestrians.

### BRIEF DESCRIPTION OF THE DRAWINGS

[FIG. 1] FIG. 1 is a block diagram showing the outline of a driving limitation system in one embodiment of the present invention.
[FIG. 2] FIG. 2 is a schematic view showing a traveling area corresponding to the embodiment shown in FIG. 1.
[FIG. 3] FIG. 3 is a schematic view showing the relation between vehicle speed control data and a vehicle speed control means in regards to the traveling limitation system of the present invention.

### MODE FOR EMBODYING THE INVENTION

Hereinafter will be described the present invention with reference to the attached drawings.

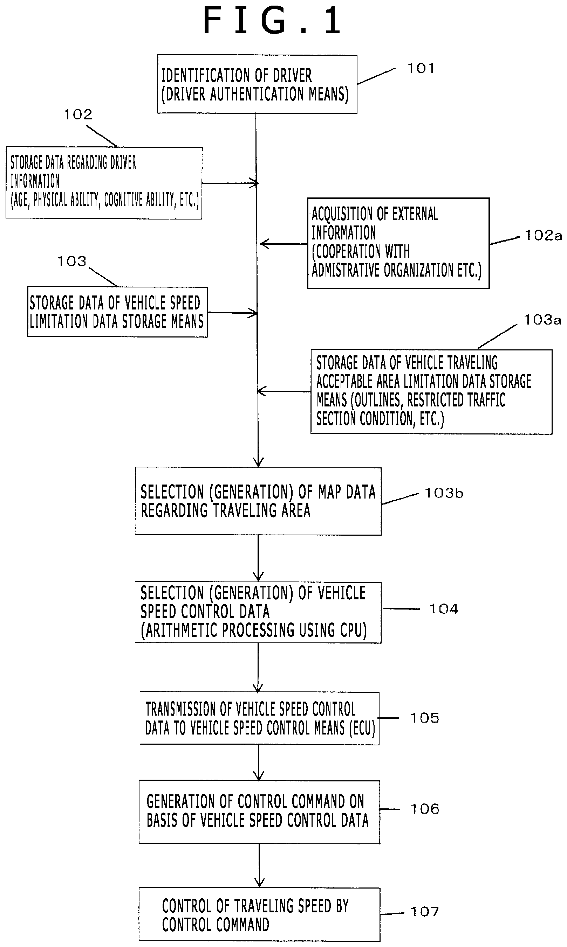

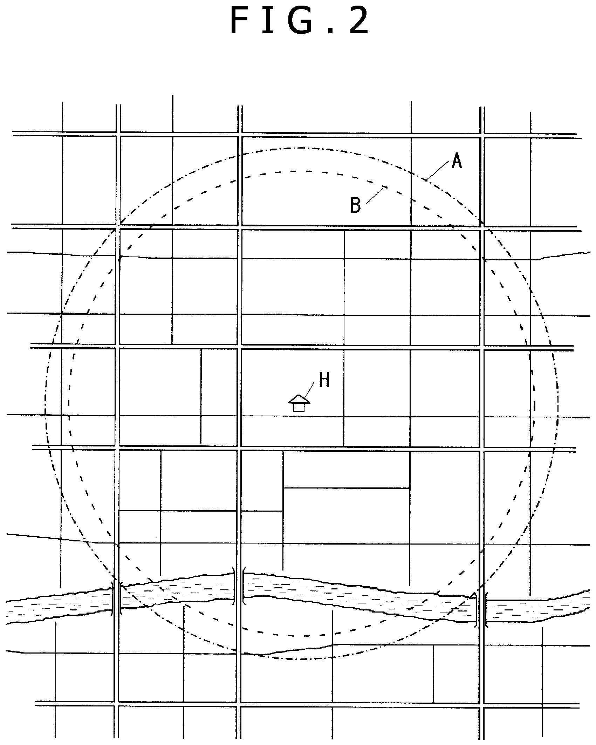

FIG. 1 is a block diagram showing the outline of a driving limitation system in one embodiment of the present invention, and FIG. 2 is a schematic view showing a traveling area corresponding to the embodiment shown in FIG. 1.

Firstly, when a driver starts driving the vehicle, identification of the driver is performed by making use of a driver authentication means such as a card reader or like input device mounted on the vehicle, a receiving device for receiving input information inputted from a mobile terminal and a biometric authentication device, for instance (step 101) .

Then, after inquiry of storage data in a memory of an on-vehicle computer, such as storage data relating to the age, physical ability, cognitive ability, traffic violation history and others about a plurality of or large number of drivers, personal information on the driver identified by the processing in the step 101 is extracted (step 102). It is to be noted that the processing of extracting the personal information on the driver in the step 102 can be performed using an external database via a communications line.

It is to be noted also that additional use of external information on traffic regulations and/or legal revisions, for instance, other than the personal information can be also made via cooperation with an administrative organization or an information management company as needed (step 102a).

Based on the information obtained by the processing in the steps 102 and 102a, storage data relating to vehicle speed limitation is extracted from the on-vehicle computer memory or external database provided to serve as a vehicle speed limitation data storage means (step 103).

Based on the information obtained by the processing in the steps 102 and 102a, storage data relating to vehicle traveling area limitation is further extracted from the on-vehicle computer memory or external database provided to serve as a vehicle traveling area limitation data storage means (step 103a).

The storage data relating to the vehicle traveling area limitation can be interlocked with map data owned by a car navigation system and is thus applicable to selection and generation of map data regarding a traveling area (step 103b).

Based on the extracted data obtained by the processing in the steps 102, 102a, 103, 103a and 103b, such as the data relating to the driver, the vehicle speed limitation and the vehicle traveling area limitation, selection or arithmetic processing is performed using an on-vehicle computer CPU provided to serve as a vehicle speed control data generation means, and consequently, a traveling speed control command in accordance with the physical ability and/or cognitive ability of the driver is generated (step 104).

The traveling speed control command in this case is supposed to instruct, in accordance with the information on the identified driver, a speed lower than a legal speed limit on a road where a driver's own vehicle is traveling, and therefore, the processing of setting a safety speed suited to the identified driver is performed.

When a prescribed distance from a driver's own house H of an aged driver, specifically, an area of 50km radius therefrom is assumed to be a traveling acceptable area A, for instance, as schematically shown in FIG. 2, traveling speed control is performed so as to gradually make the traveling speed of the vehicle lower before the driver's own vehicle reaches the traveling acceptable area A.

Because of the fact that an action of suddenly stopping the vehicle on the boundary between the traveling acceptable area and a traveling prohibited area is a rather dangerous action and besides, involves the need for operation of returning to the starting point, the execution of traveling speed control so as to make the traveling speed of the vehicle lower under a condition that an alarming area B is set ahead of the boundary of the traveling acceptable area A results in allowing the driver to recognize that the driver's own vehicle is approaching the vicinity of the boundary of the traveling acceptable area A, thereby making it possible to urge the driver to stop the vehicle safely and return to the starting point.

The traveling speed control command is transmitted to a vehicle speed control means (ECU, for instance) (step 105), and in the vehicle speed control means, a control command for controlling the vehicle speed is generated based on the indicated safety speed and traveling acceptable area (step 106) .

This control command is sent in the form of a control signal to an engine and/or to a braking system to set the traveling speed of the vehicle to be equal to or lower than the safety speed in a traveling section (step 107).

The processing of control command generation in the vehicle speed control means and also of traveling speed control by means of transmission of the control command to the engine and/or to the braking system is basically equivalent to that of a technology used in the conventional vehicle speed control means, and accordingly, use of the conventional control system can be also made in regards to this processing.

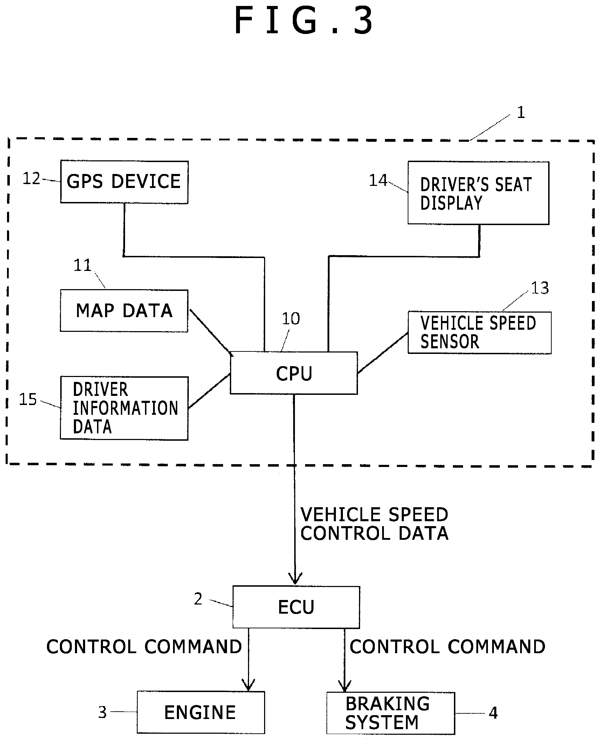

FIG. 3 schematically shows the relation between the vehicle speed control data and the vehicle speed control means in regards to the driving limitation system incorporated in a car navigation system 1.

The car navigation system 1 can utilize a commonly used car navigation device and contains driver information 15 in addition to main constitutional elements such as a CPU 10, map data 11 introduced by a DVD-ROM and a reading device, a GPS device 12, a vehicle speed sensor 13 and a driver's seat display 14.

The vehicle speed control data subjected to arithmetic processing with the CPU 10 of the car navigation system 1 into which a program of the driving control system of the present invention is incorporated is transmitted to a vehicle speed control means 2 such as ECU, and an engine 3 and/or a braking system 4 is controlled in response to a control command from the vehicle speed control means 2 to set the traveling speed of the vehicle to be equal to or lower than a speed prescribed in accordance with the driver.

### EXPLANATION OF REFERENCE NUMERALS

1 ... Car navigation system, 2 ... Vehicle speed control means, 3 ... Engine, 4 ... Braking system, 10 ... CPU, 11 ... Map data, 12 ... GPS device, 13 ... Vehicle speed sensor, 14 ... Driver's seat display, 15 ... Driver information

## Claims

1. A driving limitation system comprising:
a driver authentication means for identifying a driver of a vehicle, and
a driver information storage means in which driver information (15) on the driver identified by said driver authentication means is stored,
**characterized by**
a vehicle speed limitation data storage means in which data relating to vehicle speed limitation to be applied in accordance with physical ability information or cognitive ability information on the driver is stored,
a vehicle speed control data generation means for, in regards to the driver identified by said driver authentication means, extracting storage data relating to the vehicle speed limitation from said vehicle speed limitation data storage means on the basis of the driver information extracted from said driver information storage means, and then generating vehicle speed control data,
a vehicle traveling area limitation data storage means in which data relating to vehicle traveling area limitation to be applied in accordance with the physical ability information or cognitive ability information of the driver is stored, and
a vehicle traveling acceptable area setting means for, in accordance with the driver information extracted from said driver information storage means, extracting vehicle traveling area limitation data from among the storage data in said vehicle traveling area limitation data storage means, and then setting a vehicle traveling acceptable area,
wherein the vehicle speed control data generated by said vehicle speed control data generation means is transmitted to a vehicle speed control system (2),
a traveling speed control command is generated to perform traveling speed control in said vehicle speed control system (2), and
traveling speed control is performed based on said traveling speed control command to set the traveling speed of said vehicle to be equal to or lower than a speed that is based on said vehicle speed control data, and
wherein data relating to said vehicle traveling acceptable area that is set by said vehicle traveling acceptable area setting means is transmitted to said vehicle speed control system (2),
a traveling area control command is generated to perform vehicle traveling area control in said vehicle speed control system (2) in such a way as to gradually make the traveling speed of said vehicle lower before said vehicle reaches said traveling acceptable area; and
traveling area control is performed based on said traveling area control command to set the traveling area of said vehicle to be within a traveling area that is based on the data relating to said vehicle traveling acceptable area.

2. The driving limitation system according to claim 1, wherein said driver authentication means is a means equipped with an input device mounted on the vehicle, a receiving device for receiving input information inputted from a mobile terminal or a biometric authentication device.

3. The driving limitation system according to claim 1 or 2, wherein the driving limitation system is provided with a driver condition acquisition means for grasping a driver condition during driving, a vehicle information acquisition means for grasping a vehicle condition during driving, and an around-vehicle information acquisition means for grasping a situation around the vehicle during driving, and wherein one of or more than one of an abnormality alarm means for generating an alarm in case of abnormality, an emergency stop means for stopping the vehicle and an emergency guide means for guiding to a place of safety or to a specific facility is provided to cope with the abnormality when recognized by any of said driver condition acquisition means, said vehicle information acquisition means and said around-vehicle information acquisition means.

## Patentansprüche

1. Fahreinschränkungssystem, mit:
einer Fahrerauthentifizierungseinrichtung zum Identifizieren eines Fahrers eines Fahrzeugs, und
einer Fahrerinformationsspeichereinrichtung, in der Fahrerinformationen (15) über den durch die Fahrerauthentifizierungseinrichtung identifizierten Fahrer gespeichert sind,
**gekennzeichnet durch**
eine Fahrzeuggeschwindigkeitsbeschränkungsdatenspeichereinrichtung, in der Daten bezüglich einer Fahrzeuggeschwindigkeitsbeschränkung, die gemäß Informationen über die physische Fähigkeit oder Informationen über die kognitive Fähigkeit des Fahrers anzuwenden ist, gespeichert sind,
eine Fahrzeuggeschwindigkeitssteuerungsdatenerzeugungseinrichtung, um in Bezug auf den durch die Fahrerauthentifizierungseinrichtung identifizierten Fahrer Speicherdaten bezüglich der Fahrzeuggeschwindigkeitsbeschränkung aus der Fahrzeuggeschwindigkeitsbeschränkungsdatenspeichereinrichtung auf der Grundlage der aus der Fahrerinformationsspeichereinrichtung extrahierten Fahrerinformation zu extrahieren, und dann Fahrzeuggeschwindigkeitssteuerungsdaten zu erzeugen,
eine Fahrzeugfahrbereichsbeschränkungsdatenspeichereinrichtung, in der Daten bezüglich einer Fahrzeugfahrbereichsbeschränkung, die gemäß der Information über die physische Fähigkeit oder der Information über die kognitive Fähigkeit des Fahrers anzuwenden ist, gespeichert sind, und
eine Fahrzeugfahrbereichsakzeptanzeinstellungseinrichtung, um gemäß der aus der Fahrerinformationsspeichereinrichtung extrahierten Fahrerinformation Fahrzeugfahrbereichsbeschränkungsdaten aus den Speicherdaten in der Fahrzeugfahrbereichsbeschränkungsdatenspeichereinrichtung zu extrahieren und dann einen akzeptablen Fahrbereich einzustellen,
wobei die von der Fahrzeuggeschwindigkeitssteuerungsdatenerzeugungseinrichtung erzeugten Fahrzeuggeschwindigkeitssteuerungsdaten an ein Fahrzeuggeschwindigkeitssteuerungssystem (2) übertragen werden,
ein Fahrgeschwindigkeitssteuerungsbefehl erzeugt wird, um eine Fahrgeschwindigkeitssteuerung in dem Fahrzeuggeschwindigkeitssteuerungssystem (2) durchzuführen, und
eine Fahrgeschwindigkeitssteuerung auf der Grundlage des Fahrgeschwindigkeitssteuerungsbefehls durchgeführt wird, um die Fahrgeschwindigkeit des Fahrzeugs auf eine Geschwindigkeit einzustellen, die gleich oder niedriger als eine Geschwindigkeit ist, die auf den Fahrzeuggeschwindigkeitssteuerungsdaten basiert, und
wobei Daten bezüglich des Fahrzeugfahrbereichsakzeptanzbereichs, der durch die Fahrzeugfahrbereichsakzeptanzeinstellungseinrichtung eingestellt wird, an das Fahrzeuggeschwindigkeitssteuerungssystem (2) übertragen werden,
ein Fahrbereichssteuerungsbefehl erzeugt wird, um eine Fahrzeugfahrbereichssteuerung in dem Fahrzeuggeschwindigkeitssteuerungssystem (2) auf eine solche Weise durchzuführen, dass die Fahrgeschwindigkeit des Fahrzeugs allmählich verringert wird, bevor das Fahrzeug den akzeptablen Fahrbereich erreicht; und
eine Fahrbereichssteuerung auf der Grundlage des Fahrbereichssteuerungsbefehls durchgeführt wird, um den Fahrbereich des Fahrzeugs so einzustellen, dass er innerhalb eines Fahrbereichs liegt, der auf den Daten bezüglich des Fahrzeugfahrbereichsakzeptanzbereichs basiert.

2. Fahreinschränkungssystem gemäß Anspruch 1, wobei die Fahrerauthentifizierungseinrichtung eine Einrichtung ist, die mit einer am Fahrzeug montierten Eingabevorrichtung, einer Empfangsvorrichtung zum Empfangen von durch ein mobiles Endgerät eingegebenen Eingabeinformationen oder einer biometrischen Authentifizierungsvorrichtung ausgestattet ist.

3. Fahreinschränkungssystem gemäß Anspruch 1 oder 2, wobei das Fahrbeschränkungssystem mit einer Fahrerzustandsbezugseinrichtung zum Erfassen eines Fahrerzustands während des Fahrens, einer Fahrzeuginformationenbezugseinrichtung zum Erfassen eines Fahrzeugzustands während des Fahrens, und einer Fahrzeugumgebungsinformationenbezugseinrichtung zum Erfassen einer Situation im Umfeld des Fahrzeugs während des Fahrens versehen ist, und wobei eine oder mehrere, einer Abnormitätsalarmeinrichtung zum Erzeugen eines Alarms im Falle einer Abnormität, einer Notstoppeinrichtung zum Anhalten des Fahrzeugs und einer Notfallleiteinrichtung zum Leiten zu einem sicheren Ort oder zu einer bestimmten Einrichtung, bereitgestellt ist, um mit der Abnormität umzugehen, wenn diese von einer der Fahrerzustandsbezugseinrichtung, der Fahrzeuginformationenbezugseinrichtung und der Fahrzeugumgebungsinformationenbezugseinrichtung erkannt wird.

## Revendications

1. Système de limitation de conduite comprenant :
un moyen d'authentification du conducteur pour identifier un conducteur d'un véhicule, et
un moyen de stockage d'informations du conducteur dans lequel sont stockées des informations (15) sur le conducteur identifié par ledit moyen d'authentification du conducteur,
**caractérisé par**
un moyen de stockage de données de limitation de vitesse du véhicule dans lequel sont stockées des données relatives à une limitation de vitesse du véhicule à appliquer conformément aux informations sur les capacités physiques ou les capacités cognitives du conducteur ;
un moyen de génération de données de contrôle de la vitesse du véhicule pour, par rapport au conducteur identifié par ledit moyen d'authentification du conducteur, extraire des données de stockage relatives à la limitation de vitesse du véhicule dudit moyen de stockage de données de limitation de vitesse du véhicule sur la base des informations sur le conducteur extraites dudit moyen de stockage d'informations du conducteur, et ensuite générer des données de contrôle de la vitesse du véhicule,
un moyen de stockage de données de limitation de zone de déplacement du véhicule dans lequel sont stockées des données relatives à la limitation de la zone de déplacement du véhicule à appliquer conformément aux informations sur les capacités physiques ou les capacités cognitives du conducteur, et
un moyen de réglage de la zone acceptable de déplacement du véhicule pour, conformément aux informations du conducteur extraites dudit moyen de stockage d'informations du conducteur, extraire des données de limitation de zone de déplacement du véhicule parmi les données de stockage dans ledit moyen de stockage de données de limitation de zone de déplacement du véhicule, et ensuite régler une zone acceptable de déplacement du véhicule,
dans lequel les données de contrôle de la vitesse du véhicule générées par ledit moyen de génération de données de contrôle de la vitesse du véhicule sont transmises à un système de contrôle de la vitesse du véhicule (2),
une commande de contrôle de la vitesse de déplacement est générée pour effectuer un contrôle de la vitesse de déplacement dans ledit système de contrôle de la vitesse du véhicule (2), et
un contrôle de la vitesse de déplacement est effectué sur la base de ladite commande de contrôle de la vitesse de déplacement afin de régler la vitesse de déplacement dudit véhicule de manière à ce qu'elle soit égale ou inférieure à une vitesse basée sur lesdites données de contrôle de la vitesse du véhicule, et
dans lequel des données relatives à ladite zone acceptable de déplacement du véhicule qui sont réglées par ledit moyen de réglage de la zone acceptable de déplacement du véhicule sont transmises audit système de contrôle de la vitesse du véhicule (2),
une commande de contrôle de la zone de déplacement est générée pour effectuer un contrôle de la zone de déplacement du véhicule dans ledit système de contrôle de la vitesse du véhicule (2) de manière à réduire progressivement la vitesse de déplacement dudit véhicule avant que ledit véhicule n'atteigne ladite zone acceptable de déplacement ; et
le contrôle de la zone de déplacement est effectué sur la base de ladite commande de contrôle de la zone de déplacement pour régler la zone de déplacement dudit véhicule de manière à ce qu'elle se trouve dans une zone de déplacement basée sur les données relatives à ladite zone acceptable de déplacement du véhicule.

2. Système de limitation de conduite selon la revendication 1, dans lequel ledit moyen d'authentification du conducteur est un moyen équipé d'un dispositif d'entrée monté sur le véhicule, d'un dispositif de réception pour recevoir des informations d'entrée entrées par un terminal mobile ou d'un dispositif d'authentification biométrique.

3. Système de limitation de conduite selon la revendication 1 ou 2, dans lequel le système de limitation de conduite est doté d'un moyen d'acquisition de l'état du conducteur pour saisir un état du conducteur pendant la conduite, d'un moyen d'acquisition d'informations sur le véhicule pour saisir un état du véhicule pendant la conduite, et d'un moyen d'acquisition d'informations sur l'environnement du véhicule pour saisir une situation autour du véhicule pendant la conduite, et dans lequel un ou plusieurs parmi un moyen d'alarme d'anomalie pour générer une alarme en cas d'anomalie, un moyen d'arrêt d'urgence pour arrêter le véhicule et un moyen de guidage d'urgence pour le guidage vers un lieu sûr ou une installation spécifique sont prévus pour faire face à l'anomalie lorsqu'elle est reconnu par l'un quelconque dudit moyen d'acquisition de l'état du conducteur, dudit moyen d'acquisition d'informations sur le véhicule et dudit moyen d'acquisition d'informations sur l'environnement du véhicule.
